# FASCICULE DE BREVET EUROPEEN

(11) **EP 1 283 738 B1**
(45) Date de publication et mention de la délivrance du brevet: **21.05.2008**
(21) Numéro de dépôt: 01931776.7
(22) Date de dépôt: 02.05.2001
(51) Int. Cl.: B01D 29/90, B01D 29/96, B01D 35/12, B01D 35/153

(54) **FILTRE EXTERIEUR A UN BAC, NOTAMMENT A UN AQUARIUM**
AUSSENFILTER, INSBESONFERE FÜR AQUARIEN
EXTERNAL TANK FILTER, IN PARTICULAR FOR AN AQUARIUM

(30) Priorité: 02.05.2000 FR 0005591
(43) Date de publication de la demande: 19.02.2003
(73) Titulaire: RENA S.A., F-74000 Meythet (FR)
(72) Inventeur: CHAUQUET, Jacques Jean, F-74130 Bonneville (FR)
(74) Mandataire: Maureau, Philippe
(86) Numéro de dépôt international: PCT/FR2001/001343
(87) Numéro de publication internationale: WO 2001/083078

(56) Documents cités:
- EP-A- 0 833 197
- US-A- 4 529 515
- US-A- 4 946 047
- US-A- 5 826 854

## Description

La présente invention a pour objet un filtre extérieur à un bac, et notamment, quoique non exclusivement, à un aquarium.

Pour maintenir l'eau d'un bac dans un état de propreté satisfaisant, il est nécessaire de réaliser la filtration de celle-ci. La filtration de l'eau peut être réalisée soit par un filtre monté à l'intérieur du bac, soit par un filtre extérieur à celui-ci, et relié au bac par des conduits respectivement d'amenée d'eau et de retour d'eau, une pompe assurant la circulation de l'eau, et le bac étant fermé de façon étanche en période d'utilisation.

Un filtre extérieur à un bac présente un certain nombre d'avantages par rapport au filtre contenu dans le bac. C'est ainsi que l'accessibilité pour l'entretien est plus facile, et que l'entretien est réalisé de façon moins fréquente, dans la mesure où le filtre est généralement plus gros. En outre, le filtre extérieur présente des avantages en terme de propreté car, lors de son nettoyage, on ne relargue pas d'impuretés à l'intérieur du bac, comme tel est le cas lors du nettoyage d'un filtre intégré au bac.

Un filtre extérieur à un bac comprend une cuve fermée de façon étanche par un couvercle équipé de raccords respectivement pour l'entrée de l'eau en provenance du bac et le retour de l'eau vers le bac. La cuve contient un panier, dans lequel se trouvent plusieurs couches de matériaux ayant des fonctionnalités différentes. Il s'agit d'une mousse ayant une action physique sur la filtration, de composants de matière poreuse ayant une action biologique au cours de la filtration, et de composants, tels que des charbons actifs, ayant une action chimique sur la filtration. L'ensemble de ces différentes fonctions permet de disposer d'une eau cristalline. L'eau entre en bas et monte verticalement à travers les paniers contenant les différents composants, pour ressortir au niveau du couvercle.

Généralement, il existe une vanne sur chaque conduit respectivement d'amenée d'eau à la cuve et de retour d'eau. Il existe également un levier d'accrochage du couvercle sur la cuve. Pour réaliser une opération de nettoyage du filtre, il convient de fermer les deux vannes avant de déverrouiller le levier assurant l'accrochage des raccords sur le couvercle de la cuve. La cuve peut ensuite être emmenée dans un évier pour réaliser le nettoyage du filtre.

Un inconvénient essentiel de ce dispositif est qu'il n'existe pas de sécurité. Il est donc possible d'omettre de fermer une vanne, ou encore de réaliser accidentellement l'ouverture d'une vanne alors que le raccord dont est équipée celle-ci n'est pas encore verrouillé sur le couvercle de la cuve. L'utilisation d'un tel filtre nécessite donc d'être très précautionneux.

Le document EP 0 833 197 concerne une installation de développement photographique équipée d'un filtre à assemblage rapide, des dispositifs à clapets étant prévus pour permettre, lors de la déconnexion du filtre, l'isolement de l'appareil vis-à-vis de la partie dégagée par le filtre.

Le document US 4 529 047 concerne une valve montée sur un filtre, le démontage du filtre ne pouvant se faire qu'après que la valve ait été basculée en position de fermeture.

Le document US 4 946 047 concerne un filtre dont le couvercle est associé à une douille qui, lors des mouvements d'ouverture et de fermeture du couvercle, permet ou non d'isoler un conduit débouchant dans le corps du filtre.

Le document US 5 826 854 concerne un dispositif permettant d'orienter le passage de fluides dans un bloc de commande. Le dispositif comprend un filtre amovible et est agencé pour éviter l'écoulement du fluide traversant le dispositif vers l'extérieur lors du démontage du filtre.

Le but de l'invention est de fournir un filtre extérieur à un bac, comportant un dispositif de connexion aux conduits d'amenée d'eau et de retour d'eau, qui soit d'une structure simple, et qui garantisse une totale sécurité d'utilisation, en assurant que, lorsque les raccords sont détachés de la cuve, les vannes les équipant soient nécessairement en position fermée.

A cet effet, dans le filtre qu'elle concerne, du type comprenant une cuve étanche contenant différents composants de filtration et constituée par une cuve fermée par un couvercle équipé d'un connecteur amovible pour un conduit d'amenée d'eau à partir du bac et un conduit de retour d'eau vers le bac, chacun des raccords de connexion des deux conduits sur le connecteur étant équipé d'une vanne permettant ou non le passage d'eau, et le connecteur étant équipé de moyens de fixation sur le couvercle, est caractérisé en ce que le connecteur est équipé d'un levier pivotant comportant une partie d'actionnement des vannes montées sur les deux conduits, et une partie d'accrochage sur le couvercle formant des moyens de fixation du connecteur sur le couvercle.

Le levier pivotant est agencé pour assurer, dans un même premier mouvement, la fermeture des vannes puis la iïbération des moyens de fixation du connecteur sur le couvercle, et dans un même second mouvement, la fixation du connecteur sur le couvercle puis l'ouverture des vannes. L'utilisation de ce filtre est donc très pratique, puisque l'actionnement d'un moyen unique permet de réaliser la manoeuvre des vannes, d'une part, et la fixation du connecteur sur le couvercle, d'autre part. En outre, l'opérateur ne peut pas commettre d'erreurs de manipulation, dans la mesure où les mouvements d'actionnement des vannes et d'actionnement des moyens de fixation sur le connecteur sont toujours décalés dans le temps et effectués dans l'ordre adapté.

Avantageusement, le levier pivotant est équipé d'un organe de sécurité destiné à coopérer avec le couvercle de la cuve afin d'empêcher son actionnement lorsque le connecteur n'est pas positionné sur le couvercle de la cuve. Cette caractéristique est intéressante, dans la mesure où elle interdit toute manoeuvre du moyen unique lorsque le connecteur n'est pas positionné sur le couvercle de la cuve. Il est ainsi impossible de réaliser l'ouverture des vannes lorsque le connecteur n'est pas positionné sur la cuve.

Suivant une forme d'exécution, le levier est pivotant autour d'un axe parallèle au plan du couvercle de la cuve, est disposé entre les raccords de connexion des deux conduits et entraîne les tournants sphériques des deux vannes qui pivotent également autour du même axe, le connecteur comportant, sur sa face inférieure, deux tronçons de tubulures destinés à être engagés avec étanchéité dans deux tronçons de tubulure du couvercle assurant le passage du liquide entre la cuve et les conduits, la partie d'actionnement dépassant de la face supérieure du connecteur et la partie d'accrochage étant constituée par au moins une rampe destinée à venir s'accrocher derrière un doigt solidaire du couvercle.

En pratique, pour démonter le connecteur, le levier est actionné dans un sens de pivotement, mouvement au cours duquel les deux vannes à tournants sphériques sont basculées en position de fermeture, après quoi chaque rampe solidaire du levier se dégage par rapport au doigt derrière lequel elle était engagée, permettant une libération du connecteur vis-à-vis du couvercle.

Suivant une autre caractéristique de ce filtre, l'organe de sécurité empêchant l'actionnement du levier lorsque le connecteur n'est pas positionné sur le couvercle est constitué par au moins une languette élastique dont une extrémité est solidaire de la partie tournante ou moyeu du levier et dont l'autre extrémité tend à pivoter vers l'extérieur sous l'effet de l'élasticité de la matière, cette languette étant guidée au cours du pivotement du levier dans une rainure ménagée dans un flasque solidaire du connecteur, cette rainure étant ouverte et permettant le dégagement de l'extrémité libre de la languette et son appui contre une paroi délimitant la rainure, lorsque le levier est en position de fermeture des vannes, cette paroi étant située en avant dans le sens de rotation vers l'ouverture des vannes, un doigt solidaire du couvercle étant prévu qui, lorsque le connecteur est positionné sur le couvercle, appuie sur l'extrémité libre de la languette pour escamoter celle-ci et permettre le pivotement du levier dans le sens d'ouverture des vannes. En pratique, il convient de positionner le connecteur sur le couvercle, pour escamoter l'extrémité libre de chaque languette de verrouillage, avant de procéder au basculement du levier pour réaliser l'accrochage du connecteur sur le couvercle et l'ouverture des vannes.

Il peut être noté que l'appui exercé sur les languettes de sécurité peut être très faible afin d'éviter de réaliser un enfoncement trop important du connecteur vis-à-vis du couvercle avant de manoeuvrer le levier en rotation. En effet, les forme des rampes et des doigts, formant cames, peuvent parfaire l'engagement du connecteur sur le couvercle.

Suivant une possibilité, les vannes sont en position de fermeture lorsque le levier est en position verticale, l'extrémité libre de chaque languette de sécurité étant alors en position basse du moyeu, et le doigt solidaire du couvercle et destiné à prendre appui contre la languette étant vertical et tourné vers le haut.

Afin de faciliter le positionnement du connecteur vis-à-vis du couvercle, la paroi supérieure du couvercle de la cuve comporte une empreinte en creux destinée à l'emboîtement du connecteur.

De toute façon, l'invention sera bien comprise à l'aide de la description qui suit, en référence au dessin schématique annexé représentant, à titre d'exemple non limitatif, une forme d'exécution de ce filtre :
Figure 1 est une vue très schématique du filtre en conditions d'utilisation ;
Figure 2 en est une vue similaire à figure 1, le connecteur étant détaché;
Figure 3 est une vue en perspective éclatée du connecteur et d'une partie du couvercle dans laquelle vient se fixer le connecteur ;
Figure 4 est une vue en coupe longitudinale du connecteur en position fixée sur le couvercle;
Figure 5 est une vue en coupe transversale du connecteur représentant l'organe de verrouillage de celui-ci en position de fermeture des vannes.

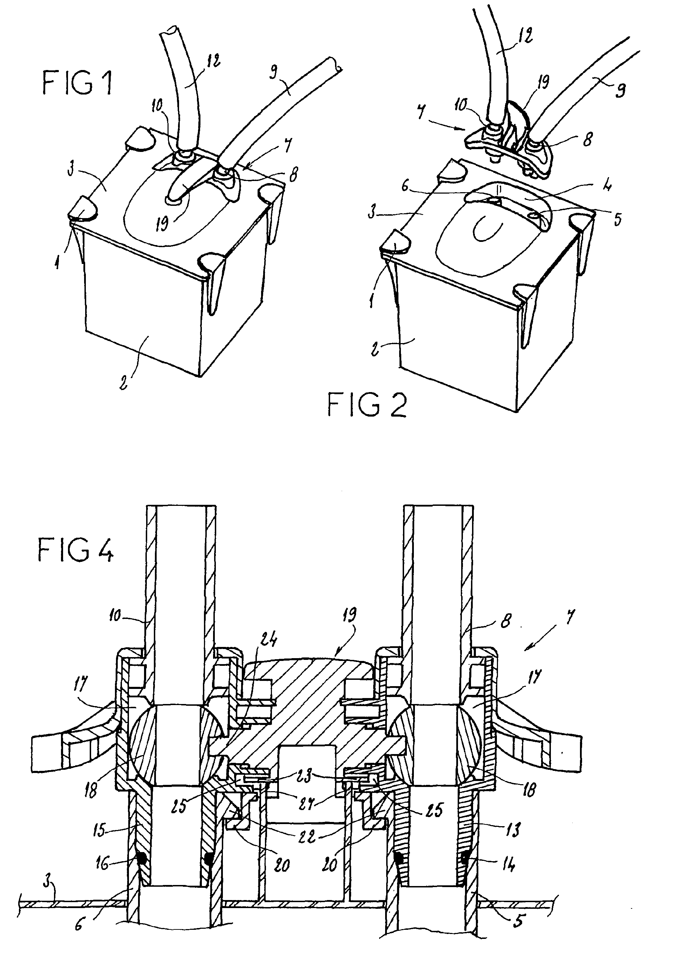

Les figures 1 et 2 représentent un filtre extérieur à un bac comprenant une cuve 2 fermée avec étanchéité par un couvercle 3 maintenu sur la cuve à l'aide de crochets 1. La face supérieure du couvercle 3 comporte une empreinte 4, dans laquelle débouchent un tronçon de tubulure 5 pour l'amenée d'eau au filtre, et un tronçon de tubulure 6 pour la sortie de l'eau hors du filtre. Dans cette empreinte 4 est destiné à être emboîté un connecteur 7. Ce connecteur 7 comprend un premier raccord 8 pour le montage d'un conduit d'amenée d'eau 9 à partir du bac, et un second raccord 10 pour le montage d'un conduit 12 de retour de l'eau vers le bac.

Le connecteur 7 est équipé, sur sa face inférieure, d'un tronçon de tubulure 13, équipé d'un joint torique 14, destiné à être engagé dans le tronçon de tubulure 5 du couvercle, et d'un tronçon de tubulure 15 équipé d'un joint torique 16, destiné à être engagé dans le tronçon de tubulure 6 du couvercle. Le connecteur 7 comprend deux vannes 17 équipées de tournants 18 entraînés par un même organe.

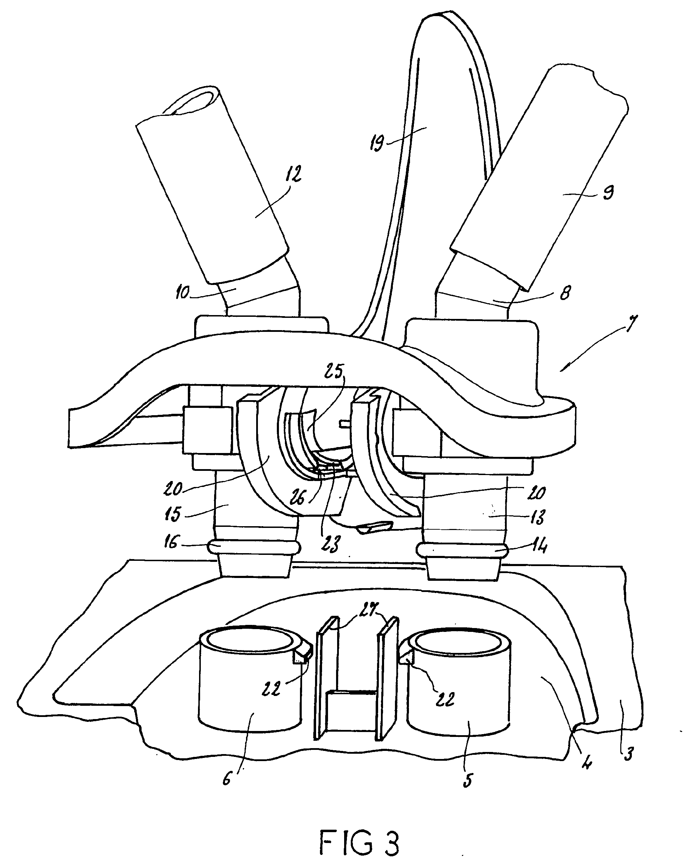

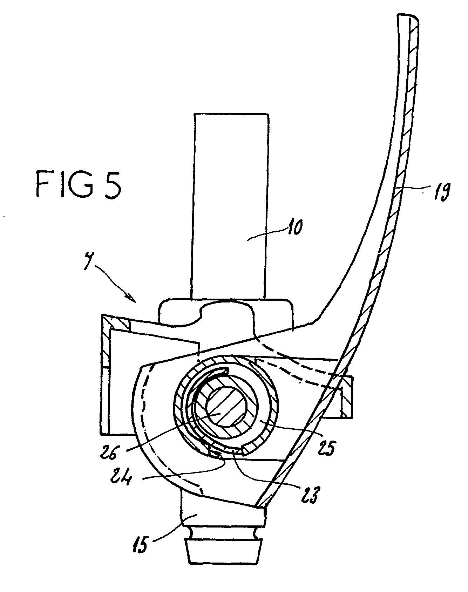

Le connecteur 7 comprend un levier 19 monté pivotant autour d'un axe correspondant à l'axe des tournants 18 des vannes 17, et possède une partie calée sur ces tournants afin de les entraîner en rotation. Dans sa partie inférieure, le levier 19 comporte deux rampes 20 qui sont destinées, lors du basculement à partir d'une position verticale du levier, représenté aux figures 3 et 5, vers une position horizontale plaquée contre le couvercle, à venir s'engager derrière deux doigts 22 solidaires des deux tronçons de tubulure 5, 6 dépassant du couvercle. Il doit être noté que, partant d'une position dans laquelle le levier 19 est plaqué contre le couvercle, et les vannes 17 sont en position d'ouverture, comme représenté à la figure 4, le basculement du levier 19 vers le haut se traduit, dans un premier temps, par la fermeture des vannes 17, puis par l'échappement des rampes 20 hors des doigts 22, afin de n'assurer la libération du connecteur 7 vis-à-vis du couvercle qu'après que la fermeture des vannes ait été réalisée.

Le dispositif selon l'invention comprend un organe de sécurité constitué par une languette 23, empêchant l'actionnement du levier 19 lorsque le connecteur 7 n'est pas positionné sur le couvercle. Cet organe de sécurité est constitué par une languette 23 élastique, dont une extrémité est solidaire de la partie tournante ou moyeu 24 du levier, et dont l'autre extrémité tend à pivoter vers l'extérieur sous l'effet de l'élasticité de la matière. Cette languette 23 est guidée au cours du pivotement du levier 19 dans une rainure 25 ménagée dans un flasque solidaire du connecteur. Cette rainure 25 comporte une ouverture 26 tournée vers le bas permettant le dégagement de l'extrémité libre de la languette et son appui contre une paroi délimitant la rainure 25 lorsque le levier est en position verticale de fermeture des vannes, comme représenté à la figure 5. Pour chaque languette 23, un doigt vertical 27, solidaire du couvercle, vient prendre appui sur l'extrémité libre de la languette, lors de l'introduction du connecteur dans l'empreinte 4 du couvercle, cet appui permettant l'escamotage de la languette dans la rainure 25, ce qui permet de faire pivoter le levier dans le sens d'ouverture des vannes et d'accrochage du connecteur sur le couvercle.

Comme il ressort de ce qui précède, l'invention apporte une grande amélioration à la technique existante en fournissant un filtre extérieur à un bac, de structure simple, permettant, dans un seul geste, la fermeture des vannes d'amenée et de retour d'eau vers le bac, ainsi que la désolidarisation du connecteur et du couvercle du filtre. Pour le remontage du connecteur sur le filtre, les différentes opérations sont effectuées d'un seul mouvement dans l'ordre inverse.

Comme il va de soi, l'invention ne se limite pas à la seule forme d'exécution de ce filtre, décrite ci-dessus à titre d'exemple, elle en embrasse au contraire toutes les variantes. C'est ainsi notamment que le levier pourrait ne pas être un levier pivotant autour d'un axe horizontal, mais pivotant autour d'un axe vertical et entraînant, par exemple, un disque servant à l'obturation des conduits d'amenée et de retour d'eau, ce disque étant muni d'encoches permettant son immobilisation dans la position de fermeture des conduits, pour éviter tous risques d'ouverture accidentelle de ceux-ci après que le filtre ait été déconnecté.

## Revendications

1. Filtre extérieur à un bac, notamment à un aquarium, du type comprenant une cuve étanche contenant différents composants de filtration et constituée par une cuve (2) fermée par un couvercle (3) équipé d'un connecteur amovible (7) pour un conduit (9) d'amenée d'eau à partir du bac et un conduit (12) de retour d'eau vers le bac, chacun des raccords de connexion des deux conduits sur le connecteur étant équipé d'une vanne permettant ou non le passage d'eau, et le connecteur étant équipé de moyens de fixation sur le couvercle, **caractérisé en ce que** le connecteur (7) est équipé d'un levier Pivotant (19) comportant une partie d'actionnement simultané des vannes montées sur les deux conduits, et une partie d'accrochage sur le couvercle (3) formant les moyens de fixation du connecteur (7) sur le couvercle.

2. Filtre selon la revendication 1, **caractérisé en ce que** le levier pivotant (19) est agencé pour assurer, dans un même premier mouvement, la fermeture des vannes (17) puis la libération des moyens de fixation du connecteur (7) sur le couvercle (3), et dans un même second mouvement, la fixation du connecteur (7) sur le couvercle (3) puis l'ouverture des vannes (17).

3. Filtre selon l'une des revendications 1 et 2, **caractérisé en ce que** le levier Pivotant (19) est équipé d'un organe de sécurité (23) destiné à coopérer avec le couvercle de la cuve afin d'empêcher son actionnement lorsque le connecteur (7) n'est pas positionné sur le couvercle (3) de la cuve (2).

4. Filtre selon l'une des revendications 1 à 3, **caractérisé en ce que** le levier (19) est pivotant autour d'un axe parallèle au plan du couvercle (3) de la cuve, est disposé entre les raccords (8, 12) de connexion des deux conduits (9, 13) et entraîne les tournants sphériques (18) des deux vannes (17) qui pivotent également autour du même axe, le connecteur (7) comportant sur sa face inférieure deux tronçons du tubulures (13, 15) destinés à être engagés avec étanchéité dans deux tronçons de tubulure (5, 6) du couvercle (3) assurant le passage du liquide entre la cuve et les conduits, la partie d'actionnement dépassant de la face supérieure du connecteur et la partie d'accrochage étant constituée par au moins une rampe (20) destinée à venir s'accrocher derrière un doigt (22) solidaire du couvercle (3).

5. Filtre selon l'une des revendications 3 et 4, **caractérisé en ce que** l'organe de sécurité empêchant l'actionnement du levier lorsque le connecteur (7) n'est pas positionné sur le couvercle (3) est constitué par au moins une languette élastique (23) dont une extrémité est solidaire de la partie tournante ou moyeu (24) du levier (19) et dont l'autre extrémité tend à pivoter vers l'extérieur sous l'effet de l'élasticité de la matière, cette languette (23) étant guidée au cours du pivotement du levier (19) dans une rainure (25) ménagée dans un flasque solidaire du connecteur, cette rainure étant ouverte (26) et permettant le dégagement de l'extrémité libre de la languette (23) et son appui contre une paroi délimitant la rainure (25), lorsque le levier (19) est en position de fermeture des vannes, cette paroi étant située en avant dans le sens de rotation vers l'ouverture des vannes, un doigt (27) solidaire du couvercle (3) étant prévu qui, lorsque le connecteur (7) est positionné sur le couvercle (3), appuie sur l'extrémité libre de la languette (23) pour escamoter celle-ci et permettre le pivotement du levier (19) dans le sens d'ouverture des vannes (17).

6. Filtre selon la revendication 5, **caractérisé en ce que** les vannes (17) sont en position de fermeture lorsque le levier (19) est en position verticale, l'extrémité libre de chaque languette (23) de sécurité étant alors en position basse du moyeu, et le doigt (27) solidaire du couvercle (3) et destiné à prendre appui contre la languette (23) étant vertical et tourné vers le haut.

7. Filtre selon l'une des revendications 4 à 6, **caractérisé en ce que** la paroi supérieure du couvercle (3) de la cuve comporte une empreinte (4) en creux destinée à l'emboîtement du connecteur (7).

## Claims

1. Filter external to a tank, particularly to an aquarium, of the type comprising a sealed vessel containing various filtration components and consisting of a vessel (2) closed by a lid (3) equipped with a removable connector (7) for a pipe (9) for conveying water from the tank and a pipe (12) for returning water to the tank, each of the couplings for connecting the two pipes to the connector being equipped with a valve which either does or does not allow water to pass, and the connector being equipped with means of fixing to the lid, **characterized in that** the connector (7) is equipped with a pivoting lever (19) comprising a part for simultaneous actuation of the valves mounted on the two pipes and a part for attachment to the lid (3) forming the means of fixing the connector (7) to the lid.

2. Filter according to Claim 1, **characterized in that** the pivoting lever (19) is arranged in such a way that, in one and the same first movement it closes the valves (17) then releases the means of fixing the connector (7) to the lid (3) and in one and the same second movement it fixes the connector (7) to the lid (3) then opens the valves (17).

3. Filter according to either of Claims 1 and 2, **characterized in that** the pivoting lever (19) is equipped with a safety member (23) intended to interact with the lid of the tank in order to prevent it from being actuated when the connector (7) is not positioned on the lid (3) of the vessel (2).

4. Filter according to one of Claims 1 to 3, **characterized in that** the lever (19) can pivot about an axis which is parallel to the plane of the lid (3) of the vessel, is arranged between the couplings (8, 12) for connecting the two pipes (9, 13) and drives the spherical plugs (18) of the two valves (17) which also pivot about the same axis, the connector (7) comprising on its underside two portions of piping (13, 15) intended to be engaged with sealing in two portions of piping (5, 6) belonging to the lid (3) allowing liquid to pass between the vessel and the pipes, the actuating part protruding from the upper face of the connector and the catching part consisting of at least one ramp (20) intended to catch behind a finger (22) integral with the lid (3).

5. Filter according to either of Claims 3 and 4, **characterized in that** the safety member preventing actuation of the lever when the connector (7) is not positioned on the lid (3) consists of at least one elastic tongue (23) one end of which is integral with the turning part or hub (24) of the lever (19) and the other end of which tends to pivot outward under the effect of the elasticity of the material, this tongue (23) being guided while the lever (19) pivots in a groove (25) made in a cheek integral with the connector, this groove being open (26) and allowing the free end of the tongue (23) to emerge and bear against a wall delimiting the groove (25), when the lever (19) is in the valves-closed position, this wall being situated forward in the direction of rotation toward the opening of the valves, a finger (27) integral with the lid (3) being provided which, when the connector (7) is positioned on the lid (3), presses on the free end of the tongue (23) to retract it and allow the lever (19) to be pivoted in the direction of opening of the valves (17).

6. Filter according to Claim 5, **characterized in that** the valves (17) are in the closed position when the lever (19) is in the vertical position, the free end of each safety tongue (23) then being in the bottom position of the hub, and the finger (27) integral with the lid (3) and intended to press against the tongue (23) being vertical and facing upward.

7. Filter according to one of Claims 4 to 6, **characterized in that** the upper wall of the lid (3) of the vessel has a recess (4) into which the connector (7) can fit.

## Patentansprüche

1. Filter, der außen an einem Tank, besonders an einem Aquarium, angeordnet und von der Art ist, die ein dichtes Behältnis aufweist, das verschiedene Filtrationsbestandteile enthält und aus einem Behältnis (2) besteht, das durch einen Deckel (3) verschlossen ist, der mit einem entfernbaren Verbinder (7) für eine Leitung (9) zur Zuführung von Wasser vom Tank und eine Leitung (12) zur Rückführung von Wasser zum Tank versehen ist, wobei jeder der Verbindungsanschlüsse der beiden Leitungen zum Verbinder mit einem Ventil versehen ist, das den Durchgang von Wasser gegebenenfalls gestattet, und wobei der Verbinder mit Mitteln zur Befestigung am Deckel versehen ist, **dadurch gekennzeichnet, dass** der Verbinder (7) mit einem Schwenkhebel (19) versehen ist, der ein Teil zur gleichzeitigen Betätigung der an den beiden Leitungen montierten Ventile und ein Teil zum Einhängen am Deckel (3) aufweist, das die Mittel zur Befestigung des Verbinders (7) am Deckel bildet.

2. Filter nach Anspruch 1, **dadurch gekennzeichnet, dass** der Schwenkhebel (19) so angeordnet ist, dass er in ein und derselben ersten Bewegung das Schließen der Ventile (17) und dann die Freisetzung der Mittel zur Befestigung des Verbinders (7) am Deckel (3) und in ein und derselben zweiten Bewegung die Befestigung des Verbinders (7) am Deckel (3) und dann das Öffnen der Ventile (17) gewährleistet.

3. Filter nach Anspruch 1 oder 2, **dadurch gekennzeichnet, dass** der Schwenkhebel (19) mit einem Sicherungselement (23) versehen ist, das dazu bestimmt ist, mit dem Deckel des Behältnisses zusammenzuwirken, um seine Betätigung zu verhindern, wenn der Verbinder (7) nicht am Deckel (3) des Behältnisses (2) positioniert ist.

4. Filter nach einem der Ansprüche 1 bis 3, **dadurch gekennzeichnet, dass** der Hebel (19) um eine parallel zur Ebene des Deckels (3) des Behältnisses verlaufende Achse schwenkt, zwischen den Verbindungsanschlüssen (8, 12) der beiden Leitungen (9, 13) angeordnet ist und die kugelförmigen Wendepunkte (18) der beiden Ventile (17) antreibt, die ebenfalls um dieselbe Achse schwenken, wobei der Verbinder (7) an seiner unteren Fläche zwei Stutzenabschnitte (13, 15) aufweist, die unter Gewährleistung des Durchgangs der Flüssigkeit zwischen dem Behältnis und den Leitungen dicht in zwei Stutzenabschnitte (5, 6) des Deckels (3) eingreifen sollen, wobei das Betätigungsteil über die obere Fläche des Verbinders hinausragt und das Einhängeteil aus mindestens einer Rampe (20) besteht, die sich hinter einem fest mit dem Deckel (3) verbundenen Finger (22) einhängen soll.

5. Filter nach Anspruch 3 oder 4, **dadurch gekennzeichnet, dass** das Sicherungselement, das die Betätigung des Hebels verhindert, wenn der Verbinder (7) nicht am Deckel (3) positioniert ist, aus mindestens einer elastischen Lasche (23) besteht, deren eines Ende fest mit dem sich drehenden Teil oder der Nabe (24) des Hebels (19) verbunden ist und deren anderes Ende dazu neigt, unter der Wirkung der Elastizität des Materials nach außen zu schwenken, wobei diese Lasche (23) während des Schwenkens des Hebels (19) in einer Nut (25) in einem fest mit dem Verbinder verbundenen Flansch geführt wird, wobei diese Nut offen (26) ist und gestattet, dass das freie Ende der Lasche (23) ausgerückt wird und sich an einer die Nut (25) begrenzenden Wand abstützt, wenn der Hebel (19) in Schließposition der Ventile ist, wobei diese Wand in der Drehrichtung zum Öffnen der Ventile vorne angeordnet ist, wobei ein mit dem Deckel (3) fest verbundener Finger (27) vorgesehen ist, der sich am freien Ende der Lasche (23) abstützt, wenn der Verbinder (7) am Deckel (3) positioniert ist, um diese einzuklappen und das Schwenken des Hebels (19) in der Öffnungsrichtung der Ventile (17) zu gestatten.

6. Filter nach Anspruch 5, **dadurch gekennzeichnet, dass** die Ventile (17) in Schließposition sind, wenn der Hebel (19) in vertikaler Position ist, wobei das freie Ende jeder Sicherungslasche (23) dann in der unteren Position der Nabe ist und der Finger (27), der fest mit dem Deckel (3) verbunden und dazu bestimmt ist, sich an der Lasche (23) abzustützen, vertikal und nach oben gedreht ist.

7. Filter nach einem der Ansprüche 4 bis 6, **dadurch gekennzeichnet, dass** die obere Wand des Deckels (3) des Behältnisses eine Vertiefung (4) zur Verkapselung des Verbinders (7) aufweist.
